# EUROPEAN PATENT APPLICATION

(11) **EP 3 246 886 A1**
(43) Date of publication of application: **22.11.2017**
(21) Application number: 16191040.1
(22) Date of filing: 28.09.2016
(51) Int. Cl.: G08B 19/00, G08B 25/00, G08B 27/00, G08B 29/18

(54) **ALARM METHOD AND DEVICE, CONTROL DEVICE AND SENSING DEVICE**

(30) Priority: 10.05.2016 CN 201610306121
(71) Applicant: Beijing Xiaomi Mobile Software Co., Ltd., Beijing 100085 (CN)
(72) Inventor: Zhou, Shiquan, Beijing, Beijing 100085 (CN); Fu, Qiang, Beijing, Beijing 100085 (CN); Hou, Enxing, Beijing, Beijing 100085 (CN)
(74) Representative: dompatent von Kreisler Selting Werner - Partnerschaft von Patent- und Rechtsanwälten mbB

(57) **Abstract**

The present disclosure relates to an alarm method and device, a control device and a sensing device. The method includes: receiving (101, 201) a notification message sent by a sensing device based on a detected abnormality; determining (102) a smart device having a linkage relationship with the sensing device based on the notification message; and controlling (103) the smart device to output alarm information. Using embodiments of the present disclosure, when the notification message sent by the sensing device based on the detected abnormality is received, the control device can control the smart device having the linkage relationship with the sensing device to output alarm, such that a user can know the abnormality occurred in the monitoring area in time, and thus the security of a smart home system can be improved.

## Description

### TECHNICAL FIELD

The present disclosure generally relates to the field of smart home, and more particularly, to an alarm method and device, a control device and a sensing device.

### BACKGROUND

In related arts, a variety of sensing devices are installed in a smart home system. When abnormalities are detected, the sensing devices can alarm through their own alarm devices. These sensing devices are not portable enough due to their large sizes; and need to be connected with electrical wirings in the room, and thus power consumption is relatively large.

### SUMMARY

In order to address problems in related arts, the present disclosure provides an alarm method and device, a control device and a sensing device.

According to a first aspect of embodiments of the present disclosure, there is provided an alarm method, including:
receiving a notification message sent by a sensing device based on a detected abnormality;
determining a smart device having a linkage relationship with the sensing device based on the notification message; and
controlling the smart device to output alarm information.

Optionally, the determining the smart device having the linkage relationship with the sensing device based on the notification message includes:
extracting an identification of the sensing device from the notification message; and
inquiring a pre-stored linkage relationship list based on the identification, and determining a smart device corresponding to the identification and having the linkage relationship with the sensing device.

Optionally, before determining the smart device having the linkage relationship with the sensing device based on the notification message, the method further includes:
receiving a binding instruction carrying the identification of the sensing device and an identification of the smart device having the linkage relationship with the sensing device; and
storing a binding relationship corresponding to the identification of the sensing device and the identification of the smart device in the linkage relationship list.

Optionally, the controlling the smart device to output the alarm information includes:
sending a control instruction to the smart device having the linkage relationship, such that the smart device outputs the alarm information.

Optionally, the determining the smart device having the linkage relationship with the sensing device based on the notification message includes:
extracting an identification of the sensing device from the notification message;
determining whether a pre-stored identification of a smart device having a linkage relationship with itself is consistent with the identification of the sensing device; and
if it is determined that the stored identification of the smart device is consistent with the identification of the sensing device, determining that the smart device itself is the smart device having the linkage relationship with the sensing device.

Optionally, the controlling the smart device to output the alarm information includes:
reading a preset alarm mode; and
outputting the alarm information based on the alarm mode.

Optionally, the alarm information includes: any one or more of a sound alarm, a light alarm, a vibration alarm, and an alarm notification sent to a user terminal.

According to a second aspect of embodiments of the present disclosure, there is provided an alarm method, including:
determining whether an abnormality occurs in a monitoring area; and
if it is determined that the abnormality occurs, sending a notification message, such that a smart device having a linkage relationship with a sensing device outputs alarm information.

Optionally, the determining whether the abnormality occurs in the monitoring area includes any one or more of:
determining whether infrared information is detected in the monitoring area;
determining whether a detected temperature value is higher than a temperature threshold;
determining whether a detected smoke concentration is higher than a smoke threshold; and
determining whether a detected sound decibel is higher than a sound threshold.

According to a third aspect of embodiments of the present disclosure, there is provided an alarm device, including:
a first receiving module configured to receive a notification message sent by a sensing device based on a detected abnormality;
a determination module configured to determine a smart device having a linkage relationship with the sensing device based on the notification message; and
an alarm module configured to control the smart device to output alarm information.

Optionally, the determination module includes:
a first extraction sub-module configured to extract an identification of the sensing device from the notification message; and
a first determination sub-module configured to inquire a pre-stored linkage relationship list based on the identification, and determine a smart device corresponding to the identification and having the linkage relationship with the sensing device.

Optionally, the device further includes:
a second receiving module configured to receive a binding instruction carrying the identification of the sensing device and an identification of the smart device having the linkage relationship with the sensing device; and
a storage module configured to store a binding relationship corresponding to the identification of the sensing device and the identification of the smart device in the linkage relationship list.

Optionally, the alarm module includes:
a control sub-module configured to send a control instruction to the smart device having the linkage relationship, such that the smart device outputs the alarm information.

Optionally, the determination module includes:
a second extraction sub-module configured to extract an identification of the sensing device from the notification message;
a determination sub-module configured to determine whether a pre-stored identification of a smart device having a linkage relationship with itself is consistent with the identification of the sensing device; and
a second determination sub-module configured to, if it is determined that the stored identification of the smart device is consistent with the identification of the sensing device, determine that the smart device itself is the smart device having the linkage relationship with the sensing device.

Optionally, the alarm module includes:
a reading sub-module configured to read a preset alarm mode; and
an output sub-module configured to output the alarm information based on the alarm mode.

Optionally, the alarm information includes: any one or more of a sound alarm, a light alarm, a vibration alarm, and an alarm notification sent to a user terminal.

According to a fourth aspect of embodiments of the present disclosure, there is provided an alarm device, including:
a determination module configured to determine whether an abnormality occurs in a monitoring area; and
a notification module configured to, if it is determined that the abnormality occurs, send a notification message, such that a smart device having a linkage relationship with a sensing device outputs alarm information.

Optionally, the determination module includes any one or more of the following sub-modules:
a first determination sub-module configured to determine whether infrared information is detected in the monitoring area;
a second determination sub-module configured to determine whether a detected temperature value is higher than a temperature threshold;
a third determination sub-module configured to determine whether a detected smoke concentration is higher than a smoke threshold; and
a fourth determination sub-module configured to determine whether a detected sound decibel is higher than a sound threshold.

According to a fifth aspect of embodiments of the present disclosure, there is provided a control device, including: a processor; and a memory for storing instructions executable by the processor; wherein the processor is configured to:
receive a notification message sent by a sensing device based on a detected abnormality;
determine a smart device having a linkage relationship with the sensing device based on the notification message; and
control the smart device to output alarm information.

According to a sixth aspect of embodiments of the present disclosure, there is provided a sensing device, including: a processor; and a memory for storing instructions executable by the processor; wherein the processor is configured to:
determine whether an abnormality occurs in a monitoring area; and
if it is determined that the abnormality occurs, send a notification message, such that a smart device having a linkage relationship with a sensing device outputs alarm information.

According to a seventh aspect of embodiments of the present disclosure, there is provided a computer program, which when executing on a processor of a device, performs a method according to any one of the above methods according to a first aspect of embodiments of the present disclosure.

According to a seventh aspect of embodiments of the present disclosure, there is provided a computer program, which when executing on a processor of a device, performs a method according to any one of the above methods according to a second aspect of embodiments of the present disclosure.

Technical solutions provided by embodiments of the present disclosure may include the following advantageous effects.

In the present disclosure, when the notification message sent by the sensing device based on the detected abnormality is received, the control device can control the smart device having the linkage relationship with the sensing device to output alarm, such that a user can know the abnormality occurred in the monitoring area in time, and thus the security of a smart home system can be improved. Furthermore, an alarm unit in the sensing device can be omitted, such that a size of the sensing device can be reduced, and thus power consumption can be reduced and costs can be saved.

In the present disclosure, the control device can determine the smart device having the linkage relationship with the sensing device based on the pre-stored linkage relationship list, and control the smart device to alarm. Thus, the existing smart appliance is effectively utilized, and cost of the sensing device is saved.

In the present disclosure, the control device can bind the identification of the smart device having the linkage relationship based on the binding instruction sent by the sensing device or other smart devices, in order to find and determine the smart device having the linkage relationship with abnormal sensing device.

In the present disclosure, after the smart device having the linkage relationship with the sensing device is determined, the control device can send the control instruction to the smart device, such that the smart device outputs the alarm information. Thus, the existing smart appliance is effectively utilized to alarm. Furthermore, there may be more than one smart devices having the linkage relationship with the sensing devices, and thus it is ensured that the user can be timely reminded in variety of ways.

In the present disclosure, the control device can be the smart appliance in the smart home system, wherein the smart appliance determines whether the smart appliance itself is a smart device having the linkage relationship with detected abnormal sensing device; and if it is determined that the smart appliance is the smart device, outputs the alarm information. A variety of alarm ways are provided.

In the present disclosure, the smart device having the linkage relationship with the detected abnormal sensing device can send the alarm in a variety of ways, in order to remind the user to view the abnormality in time.

In the present disclosure, when the abnormality is detected, the sensing device can send the notification message, such that the control device or the smart appliance in the smart home system determines a device having the linkage relationship with the sensing device, and controls the device having the linkage relationship to output the alarm information. Thus, the sensing device in the embodiments of the present disclosure may not have an alarm unit, that is, the device having the alarm unit and having the linkage relationship can be controlled to alarm. Thus, the size and power consumption of the sensing device of the present embodiments are greatly reduced, and cost is greatly reduced either.

In the present disclosure, the sensing device can determine whether the abnormality occurs based on factors, such as detected temperature, infrared information, and the like, in order to ensure the security of the smart home system in many ways.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of an alarm method according to an exemplary embodiment of the present disclosure.
Fig. 2 is a flow chart of another alarm method according to an exemplary embodiment of the present disclosure.
Fig. 3 is a flow chart of another alarm method according to an exemplary embodiment of the present disclosure.
Fig. 4 is a schematic diagram of an application scenario of an alarm method according to an exemplary embodiment of the present disclosure.
Fig. 5 is a block diagram of an alarm device according to an exemplary embodiment of the present disclosure.
Fig. 6 is a block diagram of another alarm device according to an exemplary embodiment of the present disclosure.
Fig. 7 is a block diagram of another alarm device according to an exemplary embodiment of the present disclosure.
Fig. 8 is a block diagram of another alarm device according to an exemplary embodiment of the present disclosure.
Fig. 9 is a block diagram of another alarm device according to an exemplary embodiment of the present disclosure.
Fig. 10 is a block diagram of another alarm device according to an exemplary embodiment of the present disclosure.
Fig. 11 is a block diagram of another alarm device according to an exemplary embodiment of the present disclosure.
Fig. 12 is a block diagram of another alarm device according to an exemplary embodiment of the present disclosure.
Fig. 13 is a structural block diagram of an alarm device according to an exemplary embodiment of the present disclosure.
Fig. 14 is a structural block diagram of another alarm device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in the present disclosure only tend to depict specific embodiments, rather than restricting the present disclosure. Unless the exceptional case in which the context clearly gives supports, the singular forms "a", "an", and "the" used in the present disclosure and accompany claims are intended to include the plural forms. It should also be appreciated that the expression "and/or" used herein indicates including any and all possible combinations of one or more of the associated listed items.

It should be understood, although terms first, second, third and the like are used in the present disclosure to depict various information, such information is not restricted by these terms. These terms are only used to distinguish information of the same type from each other. For example, without departing from the scope of the present disclosure, the first information may also be referred to as the second information. Similarly, the second information may also be referred to as the first information. Depending on context, the word "if" used herein may be explained to "when" or "upon" or "in response to determination that ...".

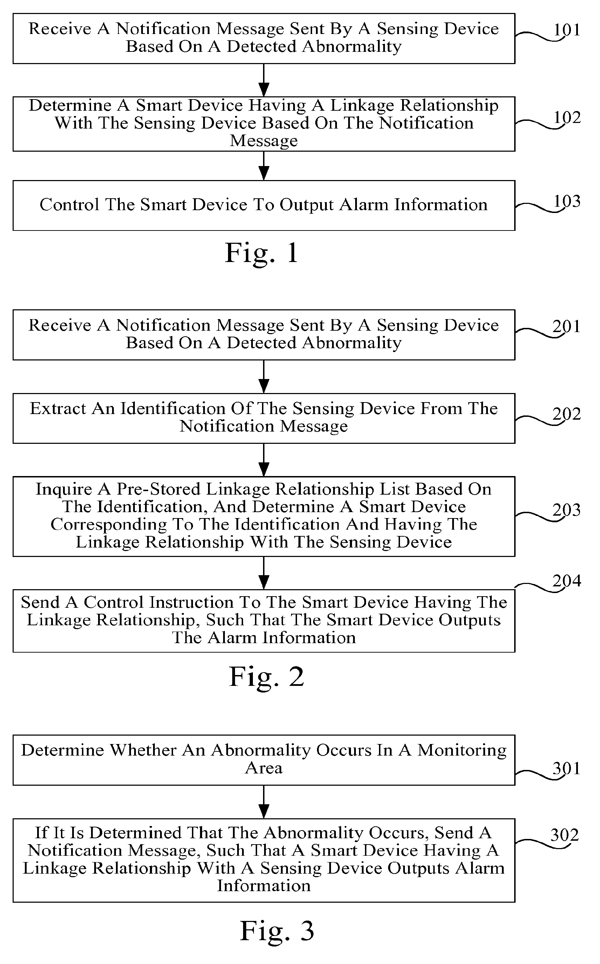

Fig. 1 is a flow chart of an alarm method according to an exemplary embodiment. As shown in Fig. 1, the method may be applied in a control device, and can include the following steps.

In step 101, a notification message sent by a sensing device based on a detected abnormality is received.

The control device in the embodiments of the present disclosure may include devices used as a center control device of a smart home system, such as a server, a router, a gateway, and the like. The control device may further include smart devices in the smart home system, such as smart appliances, and the like. The control device is connected with each smart appliance and the sensing device in the smart home system. A way of connection may include a wireless communication way, such as Wi-Fi (Wireless Fidelity), Bluetooth, Zigbee, and the like; and may also include a wired communication way, that is, the smart appliance can be connected to Internet.

The router used as a smart routing device in the present disclosure not only has a conventional routing function, but also may further include an independent operating system and a disk, a size of the storage space of the disk can be flexibly set as required, for example, 1T.

The sensing device in the present disclosure may include an infrared sensor, a temperature sensor, a sound sensor, and a gas (smoke) sensor, and the like.

The smart device in the present disclosure may include smart appliances, which are smart devices capable of outputting the alarm information in the form of sound, light or others.

In step 102, a smart device having a linkage relationship with the sensing device is determined based on the notification message.

In step 103, the smart device is controlled to output alarm information.

In the above embodiments, when the notification message sent by the sensing device based on the detected abnormality is received, the control device can control the smart device having the linkage relationship with the sensing device to output alarm, such that a user can know the abnormality occurred in the monitoring area in time, and thus the security of a smart home system can be improved. Furthermore, an alarm unit in the sensing device can be omitted, such that a size of the sensing device can be reduced, and thus power consumption can be reduced and costs can be saved.

Fig. 2 is a flow chart of another alarm method according to an exemplary embodiment. As shown in Fig. 2, the method may be applied in a control device or a smart appliance, and can include the following steps.

In step 201, a notification message sent by a sensing device based on a detected abnormality is received.

In the embodiments of the present disclosure, the abnormality detected by the sensor may include: the infrared sensor detects infrared ray emitted by a human body in the monitoring area; temperature detected by the temperature sensor is higher than a preset temperature threshold; smoke concentration detected by a smoke detector is higher than a preset concentration threshold, and so on. An execution subject can be a control device including a server, a router or a gateway, and the like, and the sensing device sends the notification message of the detected abnormality to the control device.

In another implementation, when the abnormality is detected, the sensing device can further broadcast the notification message to all smart appliances in the same smart home system.

In step 202, an identification of the sensing device is extracted from the notification message.

In step 203, a pre-stored linkage relationship list is inquired based on the identification, and a smart device corresponding to the identification and having the linkage relationship with the sensing device is determined.

In the embodiments of the present disclosure, the control device can pre-store the linkage relationship list, in which corresponding identification of the sensing device and the identification of the smart device (the smart appliance) having the linkage relationship with the sensing device are recorded. By inquiring the linkage relationship list, the control device can find the identification of the smart device corresponding to the identification in the notification message, and thus determine the smart device having the linkage relationship with the sensing device.

The process of storing the above identification to the linkage relationship list correspondingly may include:
receiving a binding instruction carrying the identification of the sensing device and an identification of the smart device having the linkage relationship with the sensing device; and storing a binding relationship corresponding to the identification of the sensing device and the identification of the smart device in the linkage relationship list.

In another implementation, if a smart appliance receives the notification message, then the smart appliance extracts the identification of the sensing device from the notification message, and inquires the identification of the sensing device stored in the smart appliance and having the linkage relationship with the smart appliance. If the extracted identification is consistent with the inquired identification, it means that the sensing device broadcasting the notification message has the linkage relationship with the smart appliance, and thus it can be determined that the smart appliance is the smart device having the linkage relationship with the sensing device. The smart device having the linkage relationship can be set through a smart home App (Application) in a smart terminal.

It should be note that, the number of the smart device having the linkage relationship with the sensing device can be more than one, thus the alarm can be simultaneously carried out in a variety of ways.

In step 204, a control instruction is sent to the smart device having the linkage relationship, such that the smart device outputs the alarm information.

After the smart device having the linkage relationship with the sensing device is determined, the control device can send the control instruction to the smart device, such that the smart device outputs the alarm information. The smart device may include devices capable of outputting the alarm information, such as a smart radio, a sound equipment and the like; the alarm information may include sound, light, voice and other forms. For example, the radio can alarm at maximum volume.

In another implementation, if it is determined that the smart device itself has the linkage relationship with the sensing device, the smart device reads its own alarm mode, and outputs the alarm information based on the alarm mode. The alarm mode can be set to modes, such as a voice alarm, an alarm notification sent to a user terminal, and the like.

Fig. 3 is a flow chart of another alarm method according to an exemplary embodiment. As shown in Fig. 3, the method may be applied in a sensing device, by combining descriptions of the embodiments shown in Fig. 1 to Fig. 2, the method includes the following steps.

In step 301, whether an abnormality occurs in a monitoring area is detected.

In the embodiments of the present disclosure, each sensing device in the smart home system detects its own monitoring area, so as to determine whether the abnormality occurs. For example, an infrared sensing device detects whether there are infrared rays in the monitoring area; and if the infrared rays are detected, it can be determined that there is a stranger in the monitoring area, that is, the abnormality is detected.

In step 302, if it is detected that the abnormality occurs, a notification message is sent, such that a smart device having a linkage relationship with a sensing device outputs alarm information.

It can be known by combining the embodiment shown in Fig. 2, if it is detected that the abnormality occurs, the sensing device can send the notification message to the control device of the smart home system, and can also broadcast the notification message to the smart device in the smart home system.

In the above embodiments, when the abnormality is detected, the sensing device can send the notification message, such that the control device or the smart appliance in the smart home system determines a device having the linkage relationship with the sensing device, and controls the device having the linkage relationship to output the alarm information. Thus, the sensing device in the embodiments of the present disclosure may not have an alarm unit, that is, the device having the alarm unit and having the linkage relationship can be controlled to alarm. Thus, the size and power consumption of the sensing device of the present embodiments are greatly reduced, and cost is greatly reduced either.

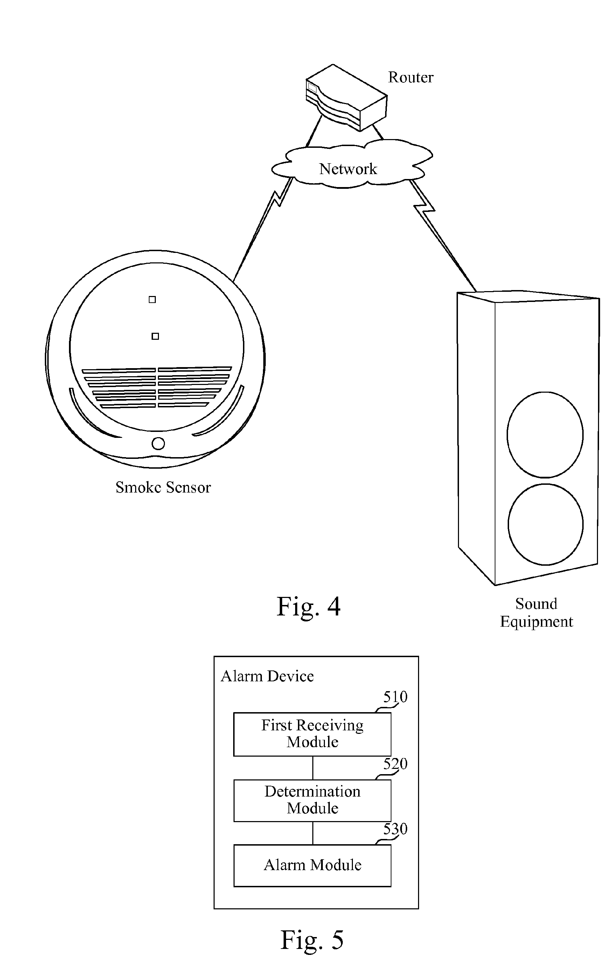

Fig. 4 is a schematic diagram of an application scenario of an alarm method according to an exemplary embodiment of the present disclosure. In the scenario in Fig. 4, a smoke sensor used as a sensing device, a router used as a control device, and a sound equipment are shown.

The smoke sensor detects smoke in the room every set time, and determines whether detected smoke value is higher than a preset smoke threshold. If it is determined that the detected smoke value is higher than the preset smoke threshold, the notification message indicating that an abnormality occurs is sent to a router. The router receives the notification message, extracts the identification of the smoke sensor from the notification message, searches the pre-stored linkage relationship list, and determines the identification of the smart appliance corresponding to the identification of the smoke sensor, namely, the identification of the smart appliance having the linkage relationship with the smoke sensor, so as to determine the smart appliance. In the present embodiment, the smart appliance is a sound equipment. Then, the router sends a control instruction to the sound equipment, the sound equipment receives the control instruction and outputs a sound alarm, so as to remind the user to view what happens in the monitoring area in time.

The process for realizing the alarm method described in connection with Fig. 1 to Fig. 3 also apply in the application scenario in Fig. 4, and thus repeated descriptions will not be elaborated herein.

Corresponding to the above-mentioned alarm method embodiments, the present disclosure also provides embodiments of an alarm device and a control device and a sensing device in which alarm device is applied.

Fig. 5 is a block diagram of an alarm device according to an exemplary embodiment of the present disclosure. As shown in Fig. 5, the device may be applied in a control device, and is used to perform the method of the embodiment shown in Fig. 1. The device includes: a first receiving module 510, a determination module 520 and an alarm module 530.

The first receiving module 510 is configured to receive a notification message sent by a sensing device based on a detected abnormality.

The determination module 520 is configured to determine a smart device having a linkage relationship with the sensing device based on the notification message received by the first receiving module 510.

The alarm module 530 is configured to control the smart device determined by the determination module 520 to output alarm information.

In the above embodiments, when the notification message sent by the sensing device based on the detected abnormality is received, the control device can control the smart device having the linkage relationship with the sensing device to output alarm, such that a user can know the abnormality occurred in the monitoring area in time, and thus the security of a smart home system can be improved. Furthermore, an alarm unit in the sensing device can be omitted, such that a size of the sensing device can be reduced, and thus power consumption can be reduced and costs can be saved.

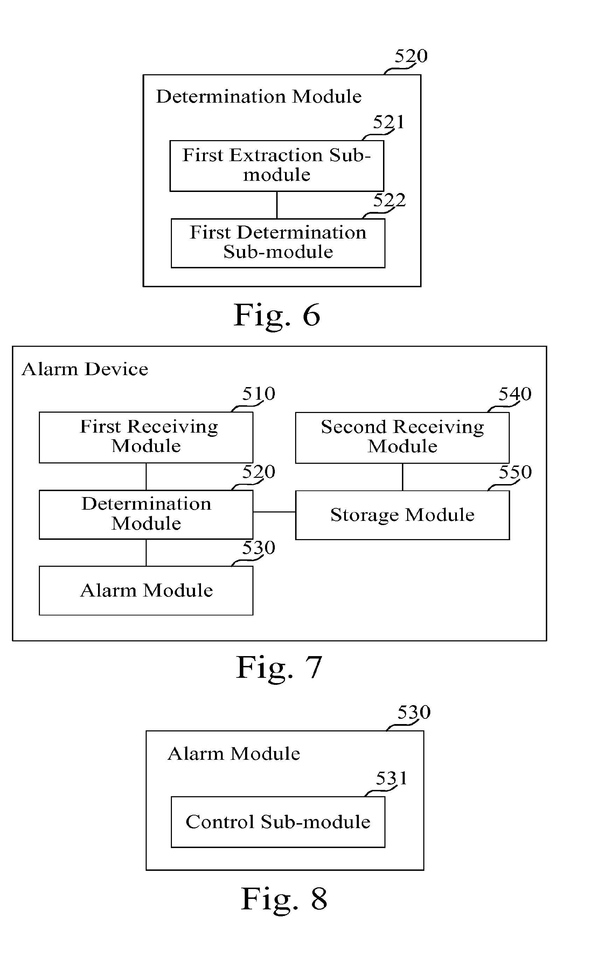

Fig. 6 is a block diagram of another alarm device according to an exemplary embodiment of the present disclosure. As shown in Fig. 6, on the basis of the above embodiment shown in Fig. 5, the determination module 520 includes: a first extraction sub-module 521 and a first determination sub-module 522.

The first extraction sub-module 521 is configured to extract an identification of the sensing device from the notification message.

The first determination sub-module 522 is configured to inquire a pre-stored linkage relationship list based on the identification extracted by the first extraction sub-module 521, and determine a smart device corresponding to the identification and having the linkage relationship with the sensing device.

In the above embodiments, the control device can determine the smart device having the linkage relationship with the sensing device based on the pre-stored linkage relationship list, and control the smart device to alarm. Thus, the existing smart appliance is effectively utilized, and cost of the sensing device is saved.

Fig. 7 is a block diagram of another alarm device according to an exemplary embodiment of the present disclosure. As shown in Fig. 7, on the basis of the above embodiment shown in Fig. 6, the device may further include: a second receiving module 540 and a storage module 550.

The second receiving module 540 is configured to receive a binding instruction carrying the identification of the sensing device and an identification of the smart device having the linkage relationship with the sensing device.

The storage module 550 is configured to store a binding relationship corresponding to the identification of the sensing device and the identification of the smart device received by the second receiving module 540 in the linkage relationship list.

In the above embodiments, the control device can bind the identification of the smart device having the linkage relationship based on the binding instruction sent by the sensing device or other smart devices, in order to find and determine the smart device having the linkage relationship with abnormal sensing device.

Fig. 8 is a block diagram of another alarm device according to an exemplary embodiment of the present disclosure. As shown in Fig. 8, on the basis of the above embodiment shown in Fig. 6 or Fig. 7, the alarm module 530 may include: a control sub-module 531.

The control sub-module 531 is configured to send a control instruction to the smart device having the linkage relationship, such that the smart device outputs the alarm information.

In the above embodiments, after the smart device having the linkage relationship with the sensing device is determined, the control device can send the control instruction to the smart device, such that the smart device outputs the alarm information. Thus, the existing smart appliance is effectively utilized to alarm. Furthermore, there are may be more than one smart devices having the linkage relationship with the sensing devices, and thus it is ensured that the user can be timely reminded in variety of ways.

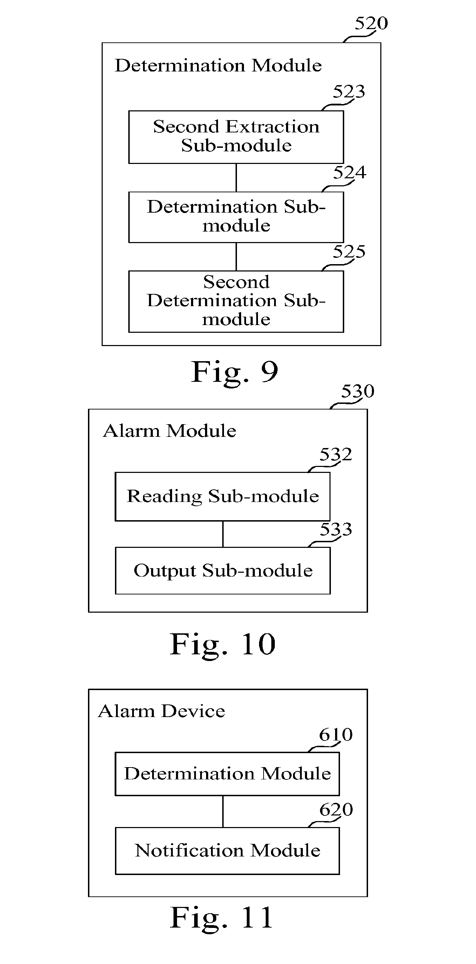

Fig. 9 is a block diagram of another alarm device according to an exemplary embodiment of the present disclosure. As shown in Fig. 9, on the basis of the above embodiment shown in Fig. 6, the determination module 520 may include: a second extraction sub-module 523, a determination sub-module524 and a second determination sub-module 525.

The second extraction sub-module 523 is configured to extract an identification of the sensing device from the notification message.

The determination sub-module 524 is configured to determine whether a pre-stored identification of a smart device having a linkage relationship with itself is consistent with the identification of the sensing device extracted by the second extraction sub-module 523.

The second determination sub-module 525 is configured to, if it is determined by the determination sub-module 524 that the stored identification of the smart device is consistent with the identification of the sensing device, determine that the smart device itself is the smart device having the linkage relationship with the sensing device.

In the above embodiments, the control device can be the smart appliance in the smart home system, wherein the smart appliance determines whether the smart appliance itself is a smart device having the linkage relationship with detected abnormal sensing device; and if it is determined that the smart appliance is the smart device, outputs the alarm information. A variety of alarm ways are provided.

Fig. 10 is a block diagram of another alarm device according to an exemplary embodiment of the present disclosure. As shown in Fig. 10, on the basis of the above embodiment shown in Fig. 9, the alarm module 530 may include: a reading sub-module 532 and an output sub-module 533.

The reading sub-module 532 is configured to read a preset alarm mode.

The output sub-module 533 is configured to output the alarm information based on the alarm mode red by the reading sub-module 532.

The above alarm information may include: any one or more of a sound alarm, a light alarm, a vibration alarm, and an alarm notification sent to a user terminal.

In the above embodiments, the smart device having the linkage relationship with the detected abnormal sensing device can send the alarm in a variety of ways, in order to remind the user to view the abnormality in time.

The above alarm device embodiments shown in Fig. 5 to Fig. 10 may be applied in the control device.

Fig. 11 is a block diagram of another alarm device according to an exemplary embodiment of the present disclosure. As shown in Fig. 11, the embodiment may be applied in a sensing device, and is used to perform the method of the embodiment shown in Fig. 3. The device may include a determination module 610 and a notification module 620.

The determination module 610 is configured to determine whether an abnormality occurs in a monitoring area.

The notification module 620 is configured to, if it is determined by the detection module 610 that the abnormality occurs, send a notification message, such that a smart device having a linkage relationship with a sensing device outputs alarm information.

In the above embodiments, when the abnormality is detected, the sensing device can send the notification message, such that the control device or the smart appliance in the smart home system determines a device having the linkage relationship with the sensing device, and controls the device having the linkage relationship to output the alarm information. Thus, the sensing device in the embodiments of the present disclosure may not have an alarm unit, that is, the device having the alarm unit and having the linkage relationship can be controlled to alarm. Thus, the size and power consumption of the sensing device of the present embodiments are greatly reduced, and cost is greatly reduced either.

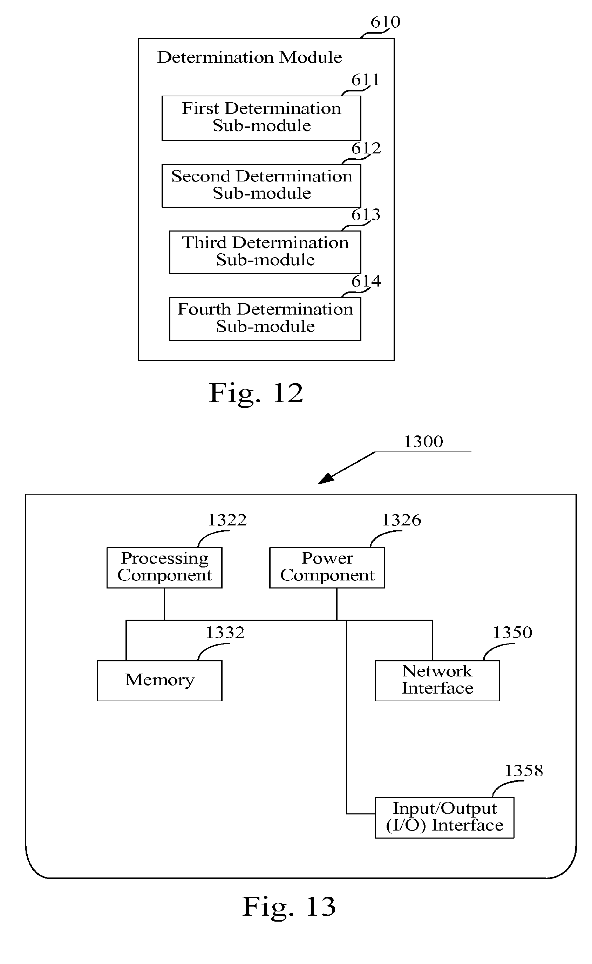

Fig. 12 is a block diagram of another alarm device according to an exemplary embodiment of the present disclosure. As shown in Fig. 12, on the basis of the above embodiment shown in Fig. 11, the determination module 610 may include any one or more of the following sub-modules: a first determination sub-module 611, a second determination sub-module 612, a third determination sub-module 613 and a fourth determination sub-module 614.

The first determination sub-module 611 is configured to determine whether infrared information is detected in the monitoring area.

The second determination sub-module 612 is configured to determine whether a detected temperature value is higher than a temperature threshold.

The third determination sub-module 613 is configured to determine whether a detected smoke concentration is higher than a smoke threshold.

The fourth determination sub-module 614 is configured to determine whether a detected sound decibel is higher than a sound threshold.

In the above embodiments, the sensing device can determine whether the abnormality occurs based on factors, such as detected temperature, infrared information, and the like, in order to ensure the security of the smart home system in many ways.

The above alarm device embodiments shown in Fig. 11 to Fig. 12 may be applied in a sensing device.

With respect to the devices in the above embodiments, the specific manners for performing operations for individual modules therein have been described in detail in the embodiments regarding the methods, which will not be elaborated herein.

For device embodiments, since they are substantially corresponding to the method embodiments, the relevant contents may be referred to some explanations in the method embodiments. The above-described device embodiments are only illustrative. The units illustrated as separate components may be or may not be separated physically, the component used as a unit display may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

Corresponding to Fig. 1, the present disclosure also provides a control device, including a processor; and a memory for storing instructions executable by the processor; wherein the processor is configured to:
receive a notification message sent by a sensing device based on a detected abnormality;
determine a smart device having a linkage relationship with the sensing device based on the notification message; and
control the smart device to output alarm information.

Corresponding to Fig. 3, the present disclosure also provides a sensing device, including a processor; and a memory for storing instructions executable by the processor; wherein the processor is configured to:
determine whether an abnormality occurs in a monitoring area; and
if it is determined that the abnormality occurs, send a notification message, such that a smart device having a linkage relationship with a sensing device outputs alarm information.

Fig. 13 is a structural block diagram of an alarm device 1300 according to an exemplary embodiment (a control device side). As shown in Fig. 13, for example, the device 1300 may be provided as a routing device. Referring to Fig. 13, the device 1300 includes a processing component 1322 that further includes one or more processors, and memory resources represented by a memory 1332 for storing instructions executable by the processing component 1322, such as application programs. The application programs stored in the memory 1332 may include one or more modules each corresponding to a set of instructions. Further, the processing component 1322 is configured to execute the instructions to perform the above alarm methods.

The device 1300 may also include a power component 1326 configured to perform power management of the device 1300, wired or wireless network interface(s) 1350 configured to connect the device 1300 to a network, and an input/output (I/O) interface 1358. The device 1300 may operate based on an operating system stored in the memory 1332, such as Windows Server™, Mac OS X™, Unix™, Linux™, FreeBSD™, or the like.

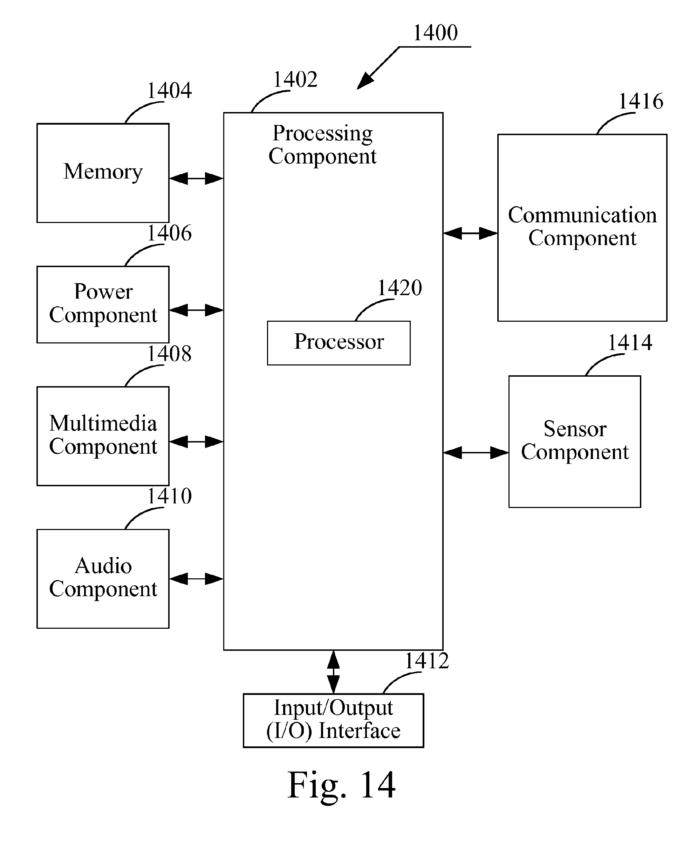

Fig. 14 is a structural block diagram of an alarm device 1400 according to an exemplary embodiment of the present disclosure (a sensing device side). As shown in Fig. 14, for example, the device 1400 may be a mobile phone having a routing function, a computer, a digital broadcast terminal, a messaging device, a gaming console, a tablet, a medical device, exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 1404 including instructions executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

The embodiments of the present disclosure also provide a non-transitory computer-readable storage medium. When the instructions in the storage medium is performed by the processor of the control device (such as a server, a router, or a smart appliance), the control device can perform an alarm method, including:
receiving a notification message sent by a sensing device based on a detected abnormality;
determining a smart device having a linkage relationship with the sensing device based on the notification message; and
controlling the smart device to output alarm information.

The embodiments of the present disclosure also provide a non-transitory computer-readable storage medium. When the instructions in the storage medium is performed by the processor of the sensing device, the sensing device can perform an alarm method, including:
determining whether an abnormality occurs in a monitoring area; and
if it is determined that the abnormality occurs, sending a notification message, such that a smart device having a linkage relationship with a sensing device outputs alarm information.

## Claims

1. An alarm method, comprising:
receiving (101, 201) a notification message sent by a sensing device based on a detected abnormality;
determining (102) a smart device having a linkage relationship with the sensing device based on the notification message; and
controlling (103) the smart device to output alarm information.

2. The method of claim 1, wherein the determining (102) the smart device having the linkage relationship with the sensing device based on the notification message comprises:
extracting (202) an identification of the sensing device from the notification message; and
inquiring (203) a pre-stored linkage relationship list based on the identification, and determining a smart device corresponding to the identification and having the linkage relationship with the sensing device.

3. The method of claim 2, wherein before determining (102) the smart device having the linkage relationship with the sensing device based on the notification message, the method further comprises:
receiving a binding instruction carrying the identification of the sensing device and an identification of the smart device having the linkage relationship with the sensing device; and
storing a binding relationship corresponding to the identification of the sensing device and the identification of the smart device in the linkage relationship list.

4. The method of claim 2 or 3, wherein the controlling (103) the smart device to output the alarm information comprises:
sending (204) a control instruction to the smart device having the linkage relationship, such that the smart device outputs the alarm information.

5. The method of claim 1, wherein the determining (102) the smart device having the linkage relationship with the sensing device based on the notification message comprises:
extracting (202) an identification of the sensing device from the notification message;
determining whether a pre-stored identification of a smart device having a linkage relationship with itself is consistent with the identification of the sensing device; and
if it is determined that the stored identification of the smart device is consistent with the identification of the sensing device, determining that the smart device itself is the smart device having the linkage relationship with the sensing device.

6. The method of claim 5, wherein the controlling (103) the smart device to output the alarm information comprises:
reading a preset alarm mode; and
outputting the alarm information based on the alarm mode.

7. The method of claim 1, wherein the alarm information comprises: any one or more of a sound alarm, a light alarm, a vibration alarm, and an alarm notification sent to a user terminal.

8. An alarm method, comprising:
determining (301) whether an abnormality occurs in a monitoring area; and
if it is determined that the abnormality occurs, sending (302) a notification message, such that a smart device having a linkage relationship with a sensing device outputs alarm information.

9. The method of claim 8, wherein the determining (301) whether the abnormality occurs in the monitoring area comprises any one or more of:
determining whether infrared information is detected in the monitoring area;
determining whether a detected temperature value is higher than a temperature threshold;
determining whether a detected smoke concentration is higher than a smoke threshold; and
determining whether a detected sound decibel is higher than a sound threshold.

10. An alarm device, comprising:
a first receiving module (510) configured to receive a notification message sent by a sensing device based on a detected abnormality;
a determination module (520) configured to determine a smart device having a linkage relationship with the sensing device based on the notification message; and
an alarm module (530) configured to control the smart device to output alarm information.

11. An alarm device, comprising:
a determination module (610) configured to determine whether an abnormality occurs in a monitoring area; and
a notification module (620) configured to, if it is determined that the abnormality occurs, send a notification message, such that a smart device having a linkage relationship with a sensing device outputs alarm information.

12. A control device, comprising:
a processor (1420); and
a memory (1332, 1404) for storing instructions executable by the processor (1420);
wherein the processor (1420) is configured to:
receive (101, 201) a notification message sent by a sensing device based on a detected abnormality;
determine (102) a smart device having a linkage relationship with the sensing device based on the notification message; and
control (103) the smart device to output alarm information.

13. A sensing device, comprising:
a processor (1420); and
a memory (1332, 1404) for storing instructions executable by the processor (1420);
wherein the processor (1420) is configured to:
determine (301) whether an abnormality occurs in a monitoring area; and
if it is determined that the abnormality occurs, send (302) a notification message, such that a smart device having a linkage relationship with a sensing device outputs alarm information.

14. A computer program, which when executing on a processor (1420) of an alarm device, performs a method according to any one of claims 1-7.

15. A computer program, which when executing on a processor (1420) of an alarm device, performs a method according to any one of claims 8-9.
